(19) Europäisches Patentamt
European Patent Office
Office européen des brevets

(11) EP 1 743 763 A1

(12) **EUROPEAN PATENT APPLICATION**
published in accordance with Art. 158(3) EPC

(43) Date of publication:
**17.01.2007 Bulletin 2007/03**

(21) Application number: **05736709.6**

(22) Date of filing: **02.05.2005**

(51) Int Cl.:
***B32B 9/00*** *(2006.01)* ***B01J 35/02*** *(2006.01)*
***B32B 7/02*** *(2006.01)* ***C09K 3/00*** *(2006.01)*
***C09K 3/18*** *(2006.01)* *C09D 201/00* *(2006.01)*

(86) International application number:
**PCT/JP2005/008289**

(87) International publication number:
**WO 2005/108056 (17.11.2005 Gazette 2005/46)**

(84) Designated Contracting States:
**BE DE FR GB IT**

(30) Priority: **06.05.2004 JP 2004137330**

(71) Applicant: **Sustainable Titania Technology Incorporated**
**Tokyo 151-0053 (JP)**

(72) Inventor: **OGATA, Shiro**
**1510053 (JP)**

(74) Representative: **Vaillant, Jeanne et al**
**Ernest Gutmann - Yves Plasseraud S.A.S.**
**3, rue Auber**
**75009 Paris (FR)**

# (54) BASE PROTECTION METHOD

(57) A novel method is provided for preventing or reducing color degradation or color change of a substrate over time, and having a function of preventing contamination, by arranging a composite of a conductor and a dielectric or a semiconductor on a surface of a substrate.

FIG. 1

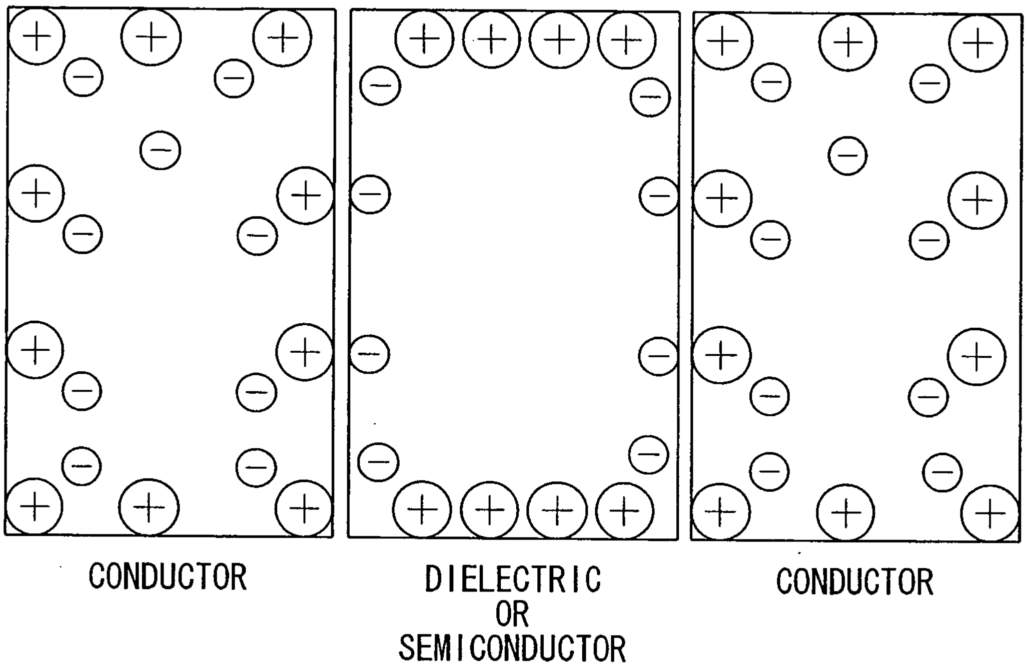


EP 1 743 763 A1

## Description

### TECHNICAL FIELD

The present invention relates to a method for making a surface of a substrate hydrophilic, preventing or reducing contamination of the surface of the substrate, and protecting the surface of the substrate by virtue of imparting a positive charge to the surface of the substrate. The present application claims priority based on Japanese Patent Application No. 2004-137330 filed on May 6, 2004, which is hereby incorporated by reference.

### BACKGROUND ART

Conventionally, it is known that various colored substrates (such as printed articles, building materials, fibers, organic polymer resin products, and the like) become faded and discolored over time. Factors in such fading and discoloration include photodegradation, adhesion of contaminants to the surface of the substrate, and the like. Various methods have been developed as countermeasures therefor.
For example, in order to prevent photodegradation, a method in which an ultraviolet absorber is mixed in a substrate has been adopted.
Moreover, in order to prevent or remove adhesion of contaminants from the surface of a substrate, a method in which a coating film having an anti-contamination function or a self-cleaning function is formed on the surface of a substrate has been developed. As an example of the aforementioned method, there is a method in which a photocatalytic layer is formed by employing anatase-type titanium oxide, described in Japanese Unexamined Patent Application, First Publication No. H09-262481.
Patent Document 1: Japanese Unexamined Patent Application, First Publication No. H09-262481

### DISCLOSURE OF THE INVENTION

#### Problems to be Solved by the Invention

However, in the case of mixing an ultraviolet absorber in a substrate, the ultraviolet absorber is decomposed by the effects of components included in the substrate, and sufficient ultraviolet absorbing effects cannot be exhibited.
In addition, in the case of imparting a photocatalytic function to the surface of a substrate, the substrate itself may be decomposed and degraded by the photocatalytic effects, depending on the type of substrate.
The present invention has an objective to provide a novel method for preventing or reducing fading or discoloration of a substrate over time.

#### Means for Solving the Problems

The objective of the present invention can be achieved by arranging a composite formed from a conductor and a dielectric or a semiconductor on the surface of the substrate or in a surface layer of the substrate.
According to the present invention, by virtue of the effects of the aforementioned composite, positive charges are produced on the surface of the substrate, and for this reason, the surface of the substrate becomes hydrophilic. Thereby, adhesion of contaminants can be prevented or reduced, and at the same time, the substrate can be protected by ultraviolet effects or the like.
The aforementioned composite preferably contains an organic silicon compound. In addition, between the aforementioned surface of the substrate and the aforementioned composite, an intermediate layer may be formed. In addition, on the surface of the aforementioned composite, a photocatalytic layer may be formed.

#### Effects of the Invention

Airborne pollutants and/or contaminants adhered on the substrate are photo-oxidized by means of sunlight or the like, and a positive charge is acquired. On the other hand, on the surface of the substrate treated by means of the method according to the present invention, a positive charge is also produced. For this reason, the aforementioned contaminants are electrostatically repelled, and thereby, naturally separated from the surface of the substrate. Therefore, it is possible to self-clean the surface of the substrate.
In addition, the substrate treated by means of the method of the present invention possesses high resistance with respect to the effects of sunlight or the like themselves. Therefore, the substrate can be greatly protected from photodegradation due to sunlight or the like.
Thereby, in the present invention, fading or discoloration of the substrate can be prevented or reduced for a

long period of time. In particular, in the case of employing together with a silicone or a modified silicone, superior effects can be exhibited.

BRIEF DESCRIPTION OF THE DRAWINGS

FIG. 1 is a diagram showing a mechanism of imparting a positive charge by a composite employed in the present invention.

FIG. 2 is a diagram showing a mechanism of removing contaminants from the surface of the substrate carries a positive charge. -

FIG. 3 is a drawing showing an outline of an example of a first method for manufacturing a metal-doped titanium oxide.

FIG. 4 is a diagram showing various modes of imparting a positive charge to a substrate.

FIG. 5 is a drawing showing the results of Evaluation 5 in Examples.

FIG. 6 is a drawing showing the results of Evaluation 6 in Examples.

FIG. 7 is a drawing showing a substrate employed in Evaluation 7 in Examples.

FIG. 8 is a drawing showing the results of Evaluation 8 in Examples.

BEST MODES FOR CARRYING OUT THE INVENTION

With respect to contaminants which cause fading or discoloration of the surface of a substrate, inorganic substances such as airborne carbons and/or organic substances such as oils are gradually deposited on the surface of the substrate, and thereby, they adhere to the surface of the substance.

The present invention has a technical idea based on the removal of the aforementioned contaminants from the substrate, or preventing or reducing adhesion of these contaminants to the substrate.

It is believed that mainly outdoor airborne contaminants, and in particular, oil components are subjected to a so-called photooxidation reaction due to various types of electromagnetic radiation such as sunlight and the like, and are under the "oxidized" condition.

Photooxidation indicates a phenomenon in which, when hydroxyl radicals ($\cdot OH$) or singlet oxygen ($^1O_2$) are produced from oxygen ($O_2$) or moisture ($H_2O$) on the surface of an organic product or an inorganic product by means of the effects of electromagnetic radiation such as sunlight or the like, electrons ($e^-$) are withdrawn from the aforementioned organic or inorganic product to thereby oxidize it. By the aforementioned oxidation, in the organic product, the molecular structure changes, so that discoloration which corresponds to a so-called deterioration or embitterment phenomenon is observed; in the inorganic product, and in particular, a metal, rust occurs. The surface of the "oxidized" organic product or inorganic product is thus positively charged by withdrawal of electrons ($e^-$).

In the present invention, by imparting a positive charge on the surface of the substrate, the aforementioned organic product or inorganic product is naturally withdrawn from the surface of the substrate by means of electrostatic repulsion. As a method for imparting a positive charge on the surface of the substrate, in the present invention, a composite formed from a conductor and a dielectric or a semiconductor is employed. The principle of imparting a positive charge by the aforementioned composite is shown in FIG. 1.

FIG. 1 is a diagram in which a combination of (a conductor)-(a dielectric or a semiconductor)-(a conductor) is arranged on the surface of a substrate or in a surface layer of the substrate, not shown in the drawing. The conductor can have a positively charged condition on the surface due to the presence of free electrons at a high concentration in which electrons can be freely moved inside thereof. In addition, as the conductor, a conductive substance containing positive ions can also be employed. On the other hand, the dielectric or semiconductor adjacent to the conductors is subjected to charge polarization by virtue of the affects of the charge conditions on the surface of the conductor. As a result, at the side adjacent to the conductor of the dielectric or semiconductor, a negative charge is produced, and on the other hand, at the side which is not adjacent to the conductor of the dielectric or semiconductor, a positive charge is produced. Due to the aforementioned effects, the surface of the combination of (a conductor)-(a dielectric or a semiconductor)-(a conductor) is positively charged, and a positive charge is provided on the surface of the substrate.

In the following, a mechanism of removal of contaminants from the surface of the substrate which is positively

charged is shown in FIG. 2.

First, by arranging a composite formed from a conductor and a dielectric or a semiconductor on the surface of the substrate or in the surface layer of the substrate, a positive charge is provided on the surface of the substrate (see FIG. 2 (1)).

Contaminants are deposited on the surface of the substrate, followed by photooxidizing by means of effects of electromagnetic radiation such as sunlight or the like. Thereby, a positive charge is also provided to the contaminants (see FIG. 2 (2)).

Electrostatic repulsion of positive charges between the surface of the substrate and the contaminants is produced, and repulsion power is produced on the contaminants. Thereby, fixing power of the contaminants to the surface of the substrate is reduced (see FIG. 2 (3)).

By means of physical effects such as wind and weather, the contaminants are easily removed from the substrate (see FIG. 2 (4)). Thereby, the substrate can be self-cleaned.

The substrate of the present invention is not particularly limited. Various inorganic substrates and organic substrates or combinations thereof can be employed.

Examples of an inorganic substrate include, for example, substrates formed from substances of transparent or opaque glass, metals, metal oxides, ceramics, concrete, mortar, stone, or the like. In addition, examples of an organic substrate include, for example, substrates formed from substances such as organic resins, wood, paper, or the like. As detailed examples of the organic resins, mention may be made of, for example, polyethylene, polypropylene, polycarbonate, polyacrylate, polyester, polyamide, polyurethane, ABS resins, polyvinyl chloride, silicone, melamine resins, urea resins, silicone resins, fluorine resins, cellulose, epoxy-modified resins, or the like. Shapes of the substrates are not particularly limited, and any shapes such as cubics, cuboids, spheres, sheets, fibers, or the like can be employed. In addition, the substrates may be porous. As the substrates, sealing materials for use in architecture or civil engineering are suitable.

The surface of the substrate may be coated with paint. As the coating material, so-called paint containing a colorant and a synthetic resin such as an alkyd resin, an acrylic resin, an amino resin, a polyurethane resin, an epoxy resin, a silicone resin, a fluorine resin, an acrylic silicone resin, an unsaturated polyester resin, an ultraviolet-curable resin, a phenol resin, a vinyl chloride resin, or a synthetic resin emulsion can be preferably employed.

The thickness of the aforementioned coating preferably ranges from 0.01 to 100 $\mu$m, more preferably ranges from 0.1 to 50 $\mu$m, and in particular, preferably ranges from 0.5 to 10 $\mu$m.

In addition, as a method for coating, for example, a spray coating method, a dip coating method, a flow coating method, a spin coating method, a roll coating method, a brush coating method, a sponge coating method, or the like can be employed. In addition, in order to improve physical properties such as hardness of the coating, adhesiveness with the substrate, and the like, heating is preferably carried out within a range acceptable for the substrate and the coating.

The conductor for forming the composite employed in the present invention is preferably a metal in view of durability. Examples thereof include metals such as aluminum, tin, cesium, indium, cerium, selenium, chromium, nickel, antimony, iron, silver, copper, manganese, platinum, tungsten, zirconium, zinc, or the like.

As the conductor, a metal salt of a certain metal can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, platinum (II) chloride, tungsten tetrachloride, tungsten oxydichloride, potassium tungstate, gold chloride, zirconium oxychloride, zinc chloride, and the like. In addition, indium hydroxide, hydroxides or oxides of tungstosilicic acid, or the like can also be employed.

As the conductor, a conductive polymer such as polyaniline, polypyrrol, polythiophene, polythiophene vinylon, polyisothianaphthene, polyacetylene, polyalkyl pyrrol, polyalkyl thiophene, poly-p-phenylene, polyphenylene vinylon, polymethoxyphenylene, polyphenylene sulfide, polyphenylene oxide, polyanthrathene, polynaphthalene, polypyrene, polyazulene, or the like can also be employed.

As the semiconductor, for example, C, Si, Ge, Sn, GaAs, Inp, GeN, ZnSe, PbSnTe, or the like, can be employed, and a semiconductor metal oxide, a photosemiconductor metal, or a photosemiconductor metal oxide can also be employed. Preferably, in addition to titanium oxide ($TiO_2$), ZnO, $SrTiOP_3$, CdS, CdO, CaP, InP, $In_2O_3$, CaAs, $BaTiO_3$, $K_2NbO_3$, $Fe_2O_3$, $Ta_2O_3$, $WO_3$, NiO, $Cu_2O$, SiC, $SiO_2$, $MoS_3$, InSb, $RuO_2$, $CeO_2$, or the like can be employed. The compound of which the_photocatalytic effects are inactivated is preferable.

As the dielectric, barium titanate (PZT) which is a strong dielectric, so-called SBT, BLT, or a composite metal such as PZT, PLZT-(Pb, La) (Zr, Ti)$O_3$, SBT, SBTN-$SrBi_2$(Ta, Nb)$_2O_9$, BST-(Ba, Sr)$TiO_3$, LSCO-(La, Sr)$CoO_3$, BLT, BIT-(Bi, La)$_4Ti_3O_{12}$, BSO-$Bi_2SiO_5$, or the like can be employed. In addition, various weak dielectric materials such as a silane compound, a silicone compound, or a so-called organomodified silica compound, which is an organic silicon compound, or an organic polymer insulating film allylene ether-based polymer, benzocyclobutene, fluorine-based polymer parylene N or F, a fluorinated amorphous carbon, or the like can also be employed.

As the composite formed from the conductor and the dielectric or the semiconductor, any combinations between

the conductors and the dielectrics or the semiconductors can be employed as long as the composites can impart a positive charge on the surface of the substrate. In view of the hydrophilic properties and self-cleaning properties of the surface of the substrate, a metal-doped titanium oxide is preferably employed. As the aforementioned metal, at least one metal element selected from the group consisting of copper, manganese, nickel, cobalt, iron, and zinc can be employed. As a titanium oxide, various oxides and peroxides such as $TiO_2$, $TiO_3$, TiO, $TiO_3/nH_2O$, and the like can be employed. In particular, titanium peroxide having a peroxy group is preferable. The titanium oxide may be amorphous-type, anatase-type, brookite-type, or rutile-type. These types may be mixed. Amorphous-type titanium oxide is preferable.

Amorphous-type titanium oxide does not have photocatalytic effects. In contrast, anatase-type, brookite-type, and rutile-type titanium oxides exhibit photocatalytic effects, but if copper, manganese, nickel, iron or zinc in a specified concentration or more is compounded therewith, the aforementioned photocatalytic effects are lost. Therefore, the aforementioned metal-doped titanium oxides exhibit no photocatalytic effects. Amorphous-type titanium oxide can be converted into anatase-type titanium oxide over time by means of heating due to sunlight, or the like. However, when copper, manganese, nickel, cobalt, iron or zinc in a specified concentration or more is compounded therewith, the aforementioned photocatalytic effects are lost. As a result, the aforementioned metal-doped titanium oxide exhibits no photocatalytic effects over time.

As a method for manufacturing the aforementioned metal-doped titanium oxide, a manufacturing method based on a hydrochloric acid method or sulfuric acid method which is a general method for manufacturing titanium dioxide powders may be employed, or a manufacturing method using any of various liquid-dispersed titania solutions may be employed. The aforementioned metal can form a composite with titanium oxide in any step of the manufacturing method.

For example, examples of a method for manufacturing the aforementioned metal-doped titanium oxide include the first to third manufacturing methods described in the following, and a sol-gel method which is conventionally known.

First Manufacturing Method

First, a compound of tetravalent titanium such as titanium tetrachloride or the like and a base such as ammonia or the like are reacted together to form titanium hydroxide. Subsequently, the aforementioned titanium hydroxide is peroxidized with an oxidizing agent to form ultra-fine particles of amorphous-type titanium peroxide. The aforementioned reaction is preferably carried out in an aqueous medium. In addition, if a heating treatment is further carried out, the amorphous-type titanium peroxide can be converted into anatase-type titanium peroxide. In one of the aforementioned steps, at least one of copper, manganese, nickel, cobalt, iron, zinc, and compounds thereof is mixed therein.

The oxidizing agent for use in peroxidation is not particularly limited. Various oxidizing agents can be employed as long as a peroxide of titanium, that is, titanium peroxide, can be produced. Hydrogen peroxide is preferable. In the case of employing an aqueous solution of hydrogen peroxide as an oxidizing agent, the concentration of hydrogen peroxide is not particularly limited. The concentration thereof ranging from 30 to 40% is preferable. Before the peroxidation reaction is carried out, titanium hydroxide is preferably cooled. The cooling temperature preferably ranges from 1 to 5°C.

One example of the aforementioned first manufacturing method is shown in FIG. 3. In the manufacturing method shown therein, an aqueous solution of titanium tetrachloride and aqueous ammonia are mixed together in the presence of at least one of copper, manganese, nickel, cobalt, iron, zinc, and compounds thereof, and thereby a mixture of a hydroxide of the aforementioned metal and a hydroxide of titanium is produced. Here, there are no particular limitations on the concentration or temperature of the reaction mixture, but the reaction is preferably carried out in a dilute solution at room temperature. The aforementioned reaction is a neutralization reaction, and therefore, it is preferable to finally adjust the pH of the reaction mixture to approximately pH 7.

The hydroxides of the metal and titanium obtained above are washed with purified water, followed by cooling to approximately 5°C. Subsequently, the hydroxides are peroxidized with an aqueous solution of hydrogen peroxide. Thereby, an aqueous dispersion containing fine particles of amorphous-type titanium oxide having a peroxy group, which is doped with a metal, i.e., an aqueous dispersion containing a metal doped titanium oxide can be produced.

Second Manufacturing Method

A compound of tetravalent titanium such as titanium tetrachloride or the like is peroxidized with an oxidizing agent, and the peroxidized product is reacted with a base such as ammonia or the like to form ultra-fine particles of amorphous-type titanium peroxide. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of copper, manganese, nickel, cobalt, iron, zinc, and compounds thereof is mixed therein.

Third Manufacturing Method

A compound of tetravalent titanium such as titanium tetrachloride or the like is reacted together with an oxidizing agent and a base to carry out formation of titanium hydroxide and peroxidation thereof at the same time, and thereby, ultra-fine particles of amorphous-type titanium peroxide are formed. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of copper, manganese, nickel, cobalt, iron, zinc, and compounds thereof is mixed therein.

Needless to say, in the first to third manufacturing methods, a mixture of the amorphous-type titanium peroxide and the anatase-type titanium peroxide obtained by heating the aforementioned amorphous-type titanium peroxide can be employed as a metal-doped titanium oxide.

Manufacturing Method Using Sol-Gel Method

A solvent such as water, an alcohol, or the like, and an acid or base catalyst are mixed and stirred with a titanium alkoxide to hydrolyze the titanium alkoxide. As a result, a sol solution of ultra-fine particles of titanium oxide is produced. Before or after the hydrolysis step, at least one of copper, manganese, nickel, cobalt, iron, zinc, and compounds thereof is mixed therein. The titanium oxide obtained above is amorphous-type titanium oxide having a peroxy group.

As the aforementioned titanium alkoxide, a compound represented by the general formula: $Ti(OR')_4$, wherein R' is an alkyl group, or a compound in which one or two of the alkoxide groups (OR') in the aforementioned general formula have been substituted with carboxyl groups or beta-dicarbonyl groups, or a mixture thereof is preferable.

Specific examples of the aforementioned titanium alkoxide include $Ti(O\text{-}iso\text{-}C_3H_7)_4$, $Ti(O\text{-}n\text{-}C_4H_9)_4$, $Ti(O\text{-}CH_2CH(C_2H_5)C_4H_9)_4$, $Ti(O\text{-}C_{17}H_{35})_4$, $Ti(O\text{-}iso\text{-}C_3H\text{-}_7)_2[CO(CH_3)CHCOCH_3]_2$, $Ti(O\text{-}nC_4H_9)_2[OC_2H_4N(C_2H_9OH)_2]_2$, $Ti(OH)_2[OCH\ (CH_3)COOH]_2$, $Ti(OCH_2CH(C_2H_5)CH(OH)C_3H_7)_4$, and $Ti(O\text{-}nC_4H_9)_2(OCOC_{17}H_{35})$, and the like.

In addition, the specific metal-doped titanium oxides of the present invention can also be produced by a method in which an "organic titanium peroxy compound" described in the specification of Japanese Unexamined Patent Application, First Publication No. 2000-159786, which is hereby incorporated by reference, and the aforementioned specific metal compound are mixed and dissolved in water, and the obtained solution is concentrated to make a gel.

Compound of Tetravalent Titanium

As the compound of tetravalent titanium employed in the manufacture of the metal-doped titanium oxide, various titanium compounds can be employed as long as titanium hydroxide, also known as ortho-titanic acid ($H_4TiO_4$), can be formed upon reacting with a base. Examples thereof include titanium salts of water-soluble inorganic acids such as titanium tetrachloride, titanium sulfate, titanium nitrate, and titanium phosphate. Other examples include titanium salts of water-soluble organic acids such as titanium oxalate, or the like. Among the various titanium compounds described above, titanium tetrachloride is preferable in view of its superior water solubility, and there being no remaining components other than titanium in the dispersion of a metal-doped titanium oxide.

In addition, in the case of employing a solution of a compound of tetravalent titanium, the concentration of the aforementioned solution is not particularly limited as long as a gel of titanium hydroxide can be formed, but a relatively dilute solution is preferable. Specifically, the concentration of the compound of tetravalent titanium preferably ranges from 5 to 0.01% by weight, and more preferably ranges from 0.9 to 0.3% by weight.

Base

As a base to be reacted with the aforementioned compound of tetravalent titanium, various bases can be employed as long as titanium hydroxide can be formed by reacting with the compound of tetravalent titanium. Examples thereof include ammonia, sodium hydroxide, sodium carbonate, potassium hydroxide, or the like. Ammonia is preferable.

In addition, in the case of employing a solution of the aforementioned base, the concentration of the aforementioned solution is not particularly limited as long as a gel of titanium hydroxide can be formed, but a relatively dilute solution is preferable. Specifically, the concentration of the basic solution preferably ranges from 10 to 0.01% by weight, and more preferably ranges from 1.0 to 0.1% by weight. In particular, in the case of employing aqueous ammonia as the basic solution, the concentration of ammonia preferably ranges from 10 to 0.01% by weight, and more preferably ranges from 1.0 to 0.1% by weight.

Metal Compound

As examples of compounds of copper, manganese, nickel, cobalt, iron, or zinc, mention may be made of the

compounds described below.

Ni compounds: $Ni(OH)_2$, $NiCl_2$

Co compounds: $Co(OH)NO_3$, $Co(OH)_2$, $CoSO_4$, $CoCl_2$

Cu compounds: $Cu(OH)_2$, $Cu(NO_3)_2$, $CuSO_4$, $CuCl_2$, $Cu(CH_3COO)_2$

Mn compounds: $MnNO_3$, $MnSO_4$, $MnCl_2$

Fe compounds: $Fe(OH)_2$, $Fe(OH)_3$, $FeCl_3$

Zn compounds: $Zn(NO_3)_2$, $ZnSO_4$, $ZuCl_2$

The concentration of titanium peroxide in the aqueous dispersion obtained in accordance with the first to third manufacturing methods (the total amount including coexisting copper, manganese, nickel, cobalt, iron or zinc) preferably ranges from 0.05 to 15% by weight, and more preferably ranges from 0.1 to 5% by weight. In addition, regarding the content of copper, manganese, nickel, cobalt, iron, or zinc, the molar ratio of titanium and the aforementioned metal component is preferably 1:1 in the present invention. In view of stability of the aqueous dispersion, the ratio preferably ranges from 1:0.01 to 1:0.5, and more preferably ranges from 1:0.03 to 1:0.1.

FIG. 4 is a diagram showing various modes of imparting a positive charge to a substrate by employing a composite of the aforementioned (conductor)-(dielectric or semiconductor).

FIG. 4 (1) shows a mode in which a composite layer consisting of fine particles of a conductor and fine particles of a dielectric or semiconductor is formed on the surface of a substrate. The particle size of the composite of the conductor and dielectric or semiconductor can be in the range of from 1 nm to 10 μm. In addition, the combination ratio of the fine particles of the conductor and the fine particles of the dielectric or semiconductor in the composite preferably ranges from 1:20 to 1:1. The thickness of the aforementioned composite layer can be in the range of from 10 nm to 100 μm.

The composite layer shown in FIG. 4 (1) can be manufactured by, for example, applying an aqueous dispersion of the aforementioned metal-doped titanium oxide to the surface of the substrate, and subsequently, drying. The thickness of the layer containing metal-doped titanium oxide preferably ranges from 0.01 μm to 2.0 μm, and more preferably ranges from 0.1 μm to 1.0 μm. As the aforementioned application method, a conventional film coating method such as brush coating, roll coating, spray coating or the like can be employed.

FIG. 4 (2) shows a mode in which fine particles of a conductor are accumulated in a surface layer of a substrate made of a dielectric or semiconductor to form a composite. The mode shown in FIG. 4 (2) can be formed by, for example, mixing, in an uncured insulating resin liquid during cast molding, a specified amount of fine particles of a conductor having a higher or lower gravity than that of the aforementioned resin. The particle size of the conductor can be in the range of from 0.1 nm to 100 nm, and preferably in the range of from 0.1 nm to 10 nm.

FIG. 4 (3) shows a mode in which fine particles of a dielectric or semiconductor are accumulated in a surface layer of a substrate made of a conductor to form a composite. The mode shown in FIG. 4 (3) can be formed by, for example, mixing, in a molten metal during casting, a specified amount of fine particles of a dielectric or semiconductor having a higher or lower gravity than that of the aforementioned resin. The particle size of the conductor can be in the range of from 0.1 nm to 100 nm, and preferably in the range of from 0.1 nm to 10 nm.

FIG. 4 (4) shows a mode in which a composite formed from fine particles of a conductor and fine particles of a semiconductor are accumulated in a surface layer of a substrate to form a composite. The mode shown in FIG. 4 (4) can be formed by, for example, mixing, in an uncured resin liquid during cast molding, a specified amount of the aforementioned composite particles having higher or lower gravity than that of the aforementioned resin.

On the surface of the aforementioned substrate, moisture ($H_2O$) in the atmosphere is physically adsorbed. By means of effects of electromagnetic radiation such as sunlight or the like, the reaction shown below is performed to decompose adsorbed moisture, thus producing hydroxyl radicals ($OH^-$).

[Chemical formula 1]

$$H_2O \xrightarrow{e^-} OH^- + H^+$$

The produced hydroxyl radicals are attracted to the positive charges of the substrate to impart hydrophilic properties to the substrate. Hydrophilication of the surface of the substrate promotes prevention or reduction of contamination, and imparts self-cleaning properties.

In addition, the positive charges of the surface of the substrate can reduce oxidative degradation of the substrate due to electromagnetic radiation. In other words, oxidative degradation of the substrate is caused by producing radicals such as $^1O_2$ (singlet oxygen), OH, or the like by means of electromagnetic radiation such as ultraviolet radiation or the like on the surface of the substrate or in the substrate, and causing an oxidative decomposition reaction. The positively charged surface of the substrate can make these radicals stable molecules. Therefore, it is believed that oxidative deterioration of the substrate may be prevented or reduced. In the case of the substrate made of a metal, occurrences of rust can be reduced by the same processes as described above.

As described above, hydrophilic properties are important to effectively exhibit self-cleaning functions (anti-contamination functions). In order to enhance increased hydrophilic properties (ultrahydrophilic properties), or promote dispersion of the aforementioned fine particles of the conductor and the fine particles of the dielectric or semiconductor, various surfactants or dispersants are preferably added.

As the surfactants or dispersants, various organic silicon compounds can be employed. As the organic silicon compounds, various silane compounds, and various silicone oils, silicone gums, and silicone resins can be employed. One having an alkylsilicate structure or a polyether structure, or one having both an alkylsilicate structure and a polyether structure, in the molecule thereof, is preferable.

Here, the alkylsilicate structure refers to a structure in which alkyl groups are bonded to silicon atoms in the siloxane backbone. On the other hand, as examples of the polyether structure, mention may be made of molecular structures such as polyethylene oxide, polypropylene oxide, polytetramethylene oxide, a block copolymer of polyethylene oxide and polypropylene oxide, a copolymer of polyethylene and polytetramethylene glycol, or a copolymer of polytetramethylene glycol and polypropylene oxide, although there is no limitation thereto. Among these, a block copolymer of polyethylene oxide and polypropylene oxide is particularly suitable in view of controllability of the wettability by a degree of blocking or the molecular weight.

An organic substance having both an alkylsilicate structure and a polyether structure in the molecule thereof is particularly preferable. Specifically, a polyether-modified silicone such as polyether-modified polydimethylsiloxane or the like is suitable. The polyether-modified silicone can be manufactured using a generally known method, for example, using a method described in Synthesis Example 1, 2, 3 or 4 in Japanese Unexamined Patent Application, First Publication No. H04-242499 or the Reference Example in Japanese Unexamined Patent Application, First Publication No. H09-165318. In particular, a polyethylene oxide-polypropylene oxide block copolymer-modified polydimethylsiloxane obtained by reacting a block copolymer of both-end-metallyl polyethylene oxide-polypropylene oxide with dihydropolydimethylsiloxane is suitable.

Specifically, TSF4445 or TSF4446 (both manufactured by GE Toshiba Silicones Co., Ltd.), SH200 (manufactured by Dow Corning Toray Silicone Co., Ltd.), KP series (manufactured by Shin-Etsu Chemical Co., Ltd.), DC3PA, ST869A, SH3746, or SG3746M (all manufactured by Dow Corning Toray Silicone Co., Ltd.), or the like can be employed. They are additives for paints, and can be employed as appropriate, as long as the aforementioned properties can be imparted.

Fundamentally, the aforementioned organic silicon compounds are utilized to stabilize the composite or the surface of the substrate. After surface treatment of the substrate, the hydrophilic part thereof is usually lost by wind and weather, and heating. In contrast, in the present invention, the surface of the substrate carries positive charges, and for this reason, even after the hydrophilic part is lost, a phenomenon in which hydrophilic functions can be recovered by means of moisture in the air can be observed.

By utilizing the aforementioned functions, a product exhibiting "functions of preventing contamination and preventing fogging" can be produced. This can be applied to any substrate, and in particular, can be utilized in a transparent substrate such as glass, metal, acrylic resin, polycarbonate resin, or the like, a ground metal plate having an increased cosmetic property, a stone substrate, or the like.

In addition, when a composite layer is formed on a substrate by adding a silicone or modified silicone having an alkyl silicate structure or a polyether structure, or both of these to the aforementioned metal-doped titanium oxide,

photocatalytic functions cannot be exhibited on the surface of the composite layer, and anti-contamination, antimicrobial properties, gas decomposition, or water decontamination due to decomposition of the organic compounds cannot be observed. Therefore, by employing the aforementioned metal-doped titanium oxide as a composite, it is possible to prevent photooxidative degradation of the substrate.

In the present invention, an intermediate layer may be present between the surface of the substrate and the composite. In particular, in the case of forming a composite layer containing an organic silicon compound on the surface of the substrate, it is preferable that an intermediate layer containing a silane compound be previously formed on the substrate. The intermediate layer includes a large amount of Si-O bonds, and for this reason, it is possible to improve strength of the composite layer or adhesiveness with the substrate. In addition, the aforementioned intermediate layer also exhibits a function of preventing moisture seeping in the substrate.

Examples of the aforementioned silane compounds include a hydrolyzable silane, a silane hydrolysate, and a mixture thereof. As the hydrolyzable silane, various alkoxysilanes can be employed. Examples thereof include a tetraalkoxysilane, an alkyltrialkoxysilane, a dialkyldialkoxysilane, or a trialkylalkoxysilane. Among these, one type of hydrolyzable silane may be employed alone or two or more types of hydrolysable silanes may be employed in combination. In addition, to the aforementioned silane compounds, various organopolysiloxanes may be added. As an agent for forming an intermediate layer containing the silane compound, Dryseal S (manufactured by Dow Corning Toray Silicone Co., Ltd.) may be mentioned.

In addition, as the agent for forming an intermediate layer, a silicone resin which is curable at room temperature, such as a methylsilicone resin, a methylphenylsilicone resin, or the like may be employed. As examples of the silicone resin which is curable at room temperature, mention may be made of AY42-170, SR2510, SR2410, SR2405, and SR2411 (all, manufactured by Dow Corning Toray Silicone Co., Ltd.).

The intermediate layer may be colorless and transparent, or colored and transparent, translucent, or opaque. Here, "colored" means not only a colored one which is red, blue, or green, or the like, but also a white one. In order to obtain a colored intermediate layer, various coloring agents such as inorganic or organic pigments, dyes, or the like are preferably blended in an intermediate layer.

Examples of inorganic pigments include carbon black, black lead, yellow lead, yellow iron oxide, red lead oxide, red iron oxide, ultramarine blue, chromic oxide green, iron oxide, or the like. As organic pigments, azo-based organic pigments, phthalocyane-based organic pigments, threne-based organic pigments, quinacridone-based organic pigments, dioxazine-based organic pigments, isoindolinone-based organic pigments, diketopyrolopyrrole, various metal complexes, or the like can be employed, and organic pigments exhibiting superior light resistance are preferable. Examples of organic pigments exhibiting light resistance include, for example, Hansa Yellow or Toluidine Red which is an insoluble azo-based organic pigment, Phtalocyanine Blue B or Phthalocyanine Green which is a phthalocyane-based organic pigment, Quinacridone Red which is a quinacridone-based organic pigment, or the like.

Examples of dyes include basic dyes, direct dyes, acidic dyes, vegetable dyes or the like. Dyes exhibiting superior light resistance are preferable. For example, direct scarlet red or azo rubine, as red; direct orange R conc, or acid orange as orange; chrysophenine NS, or methanil yellow, as yellow; direct brown KGG, or acid brown R, as brown; direct blue B as blue; direct black GX, or nigrosine BHL as black; or the like are particularly preferable.

In the case of the intermediate layer formed from a silane compound or a silicone resin, the mixing ratio (weight ratio) of the silane compound or silicone resin and the pigment preferably ranges from 1:2 to 1:0.05, and more preferably ranges from 1:1 to 1:0.1.

In the intermediate layer, an additive such as a dispersant, a stabilizer, a leveling agent, or the like may be blended. The aforementioned additives have effects of facilitating formation of the intermediate layer. In addition, in the case of blending a colorant such as a pigment, a_dye, or the like, it is also possible to add a binder for assisting fixing of the aforementioned colorant. As the binder in the aforementioned case, various binders for use in paints having acrylic esters or acrylate copolymer resins as main ingredients and exhibiting superior weather resistance can be employed. Examples thereof include Polysol AP-3720 (manufactured by Showa Highpolymer Co., Ltd.), Polysol AP-609 (manufactured by Showa Highpolymer Co., Ltd.), or the like.

The intermediate layer can be formed, for example, as described below. A solution containing an agent for forming an intermediate layer consisting of a silane compound or a silicone resin in a volatile solvent, and another optional solution containing the aforementioned colorant, the aforementioned additive, and the aforementioned binder are applied to the surface of the aforementioned substrate so that the thickness ranges from approximately 2 to 5 mm. If necessary, heating is carried out to evaporate the volatile solvent, thus forming an intermediate layer on the substrate. The colored intermediate layer is integrated with the substrate, and thereby, colored cosmetic properties can be imparted to the substrate.

The thickness of the intermediate layer formed on the substrate as described above is not particularly limited, and preferably ranges from 0.01 to 1.0 μm, and more preferably ranges from 0.05 μm to 0.3 μm. In addition, in the case of adding the colorant, additive, or binder, the thickness thereof preferably ranges from 1.0 μm to 100 μm, and more preferably ranges from 10 μm to 50 μm.

As a method for forming an intermediate layer on the substrate, any known methods can be employed. For example, spray coating, dip coating, flow coating, spin coating, roll coating, brush coating, sponge coating, or the like can be employed. In order to improve physical properties such as hardness of the intermediate layer, adhesiveness with the substrate, or the like, after the intermediate layer is formed on the substrate, heating is preferably carried out at a temperature which is within the acceptable range thereof.

On the surface of the composite of the present invention, a photocatalytically functional layer can be further provided.

The photocatalytically functional layer is a layer having a function of oxidizing and decomposing the organic and/or inorganic compounds on the surface of the aforementioned layer by a specific metal compound due to photoexcitation. It is believed that the photocatalytically principle is that a specific metal compound produces radical species such as $OH^-$ or $O_2^-$ from oxygen or moisture in the air by means of photoexcitation, and the radical species oxidization-reduction-decompose the organic and/or inorganic compounds.

However, on the surface of the photocatalytically functional layer, not a positive charge, but a negative charge is produced. For this reason, the contaminants which are positively charged by a photooxidative reaction adhere to the surface of the photocatalytically functional layer by means of electrostatic power. In addition, the adhered contaminants are decomposed by the aforementioned radical species, and at the stage in which the electrostatic power of the decomposed products is decreased, the decomposed products are removed by means of an external force such as flowing water, wind and weather, or the like.

As the aforementioned metal compound, in addition to representative titanium oxide ($TiO_2$), ZnO, $SrTiOP_3$, CdS, CdO, CaP, InP, $In_2O_3$, CaAs, $BaTiO_3$, $K_2NbO_3$, $Fe_2O_3$, $Ta_2O_3$, $WO_3$, NiO, $C_2O$, SiC, $SiO_2$, $MoS_3$, InSb, $RuO_2$, $CeO_2$, or the like are known.

The photocatalytically functional layer can be formed by applying, on a composite layer, an aqueous dispersion including fine particles (approximately 2 nm to 20 nm) of the aforementioned metal compounds together with various additives, if necessary, and drying. The thickness of the photocatalytically functional layer preferably ranges from 0.01 μm to 2.0 μm, and more preferably ranges from 0.1 μm to 1.0 μm. In order to form the photocatalytically functional layer, use of an aqueous dispersion is preferable, but an alcohol can be employed as a solvent.

The aqueous dispersion for forming a photocatalytically functional layer can be produced by, for example, the method described below. Titanium peroxide in the aqueous dispersion can be converted into titanium oxide in the state of the dried coating film.

First Manufacturing Method

The aforementioned tetravalent titanium compound and a base such as ammonia are reacted together to form titanium hydroxide. Subsequently, the aforementioned titanium hydroxide is peroxidized with an oxidizing agent such as hydrogen peroxide or the like to form ultra-fine particles of amorphous-type titanium peroxide. In addition, the amorphous-type titanium peroxide is converted into anatase-type titanium peroxide by heat treatment.

Second Manufacturing Method

The aforementioned tetravalent titanium compound is peroxidized by an oxidizing agent such as hydrogen peroxide or the like. Subsequently, the peroxidized tetravalent titanium compound is reacted with a base such as ammonia to form ultra-fine particles of amorphous-type titanium peroxide. In addition, the amorphous-type titanium peroxide is converted into anatase-type titanium peroxide by heat treatment.

Third Manufacturing Method

The aforementioned tetravalent titanium compound, an oxidizing agent such as hydrogen peroxide or the like, and a base such as ammonia are reacted together to carry out formation of titanium hydroxide and peroxidation simultaneously, and thus forming ultra-fine particles of amorphous-type titanium peroxide. In addition, the amorphous-type titanium peroxide is converted into anatase-type titanium peroxide by heat treatment.

In the photocatalytically functional layer, a metal for improving photocatalytic effects (such as Ag or Pt) can be blended. In addition, in order to reduce electrostatic adhesion of the organic and/or inorganic compounds to the surface, various substances such as metal salts or the like can be added within the range which does not deactivate the photocatalytic functions. As the aforementioned metal salts, there are salts of metals such as aluminum, tin, chromium, nickel, antimony, iron, silver, cesium, indium, cerium, selenium, copper, manganese, calcium, platinum, tungsten, zirconium, zinc, or the like. In addition thereto, as some metals or non-metals, hydroxides or oxides thereof can also be employed. More particularly, examples thereof include various metal salts such as aluminum chloride, tin (II) chloride, tin (IV) chloride, chromium chloride, nickel chloride, antimony (III) chloride, antimony (V) chloride, iron (II) chloride, iron (III)

chloride, silver nitrate, cesium chloride, indium (III) chloride, cerium (III) chloride, selenium tetrachloride, copper (II) chloride, manganese chloride, calcium chloride, platinum (II) chloride, tungsten tetrachloride, tungsten oxydichloride, potassium tungstate, gold chloride, zirconium oxychloride, zinc chloride, or the like. In addition, as compounds other than the metal salts, mention may be made of indium hydroxide, silicotungstic acid, silica sol, calcium hydroxide, or the like. In addition, in order to improve fixing properties of the photocatalytically functional layer, an amorphous type titanium oxide can also be blended.

Due to the effects of the photocatalytically functional layer, the contaminants on the surface of the substrate are decomposed, and for this reason, contamination on the surface of the substrate can be prevented, and cosmetic properties of the substrate can be maintained over time. If the photocatalytically functional layer is directly formed on the substrate, the photocatalytically functional layer may be stripped from the substrate over time. By providing an intermediate composite layer, the substrate can be finely integrated with the photocatalytically functional layer.

In the case of forming the aforementioned intermediate layer on the surface of the substrate, if the photocatalytically functional layer is directly formed on the intermediate layer, the silicone compounds or the like in the intermediate layer are deteriorated due to oxidative decomposition effects of the photocatalytically functional layer. In the present invention, between the intermediate layer and the photocatalytically functional layer, a composite layer having no photocatalytic effects is mediated. For this reason, the intermediate layer does not deteriorate.

## Industrial Applicability

The present invention can be utilized in any field in which various design properties and increased water resistance and contamination resistance are required. The present invention is suitably employed in manufacturing of many artificial materials utilized outside, such as building materials; outdoor air conditioners; kitchen instruments; hygiene instruments; lighting apparatuses; automobiles; bicycles; two-wheeled motor vehicles; airplanes; trains; boats and ships; or the like, manufactured from glass, metals, ceramics, concrete, timber, stone materials, sealants, or the like, or a combination thereof. In particular, the present invention is preferably employed in building materials. The architectural structures such as houses, buildings, roads, tunnels, or the like, manufactured by employing the aforementioned building materials, can exhibit superior water resistance and contamination resistance effects over time.

## Examples

Reference Example 1: Dispersion of composite of conductor (Cu) and dielectric (amorphous type titanium peroxide)

0.463 g of 97% $CuCl_2 \cdot 2H_2O$ (copper (II) chloride) (manufactured by Nihon Kagaku Sangyo Co., Ltd.) was completely dissolved in 500 ml of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of copper hydroxide and titanium hydroxide was precipitated. The precipitate was continually washed with purified water until the conductivity of the supernatant was not more than 0.8 mS/m. The washing was stopped when the conductivity had become 0.8 mS/m. Thereby, 340 g of a liquid containing 0.81% by weight of the hydroxide was produced.

Subsequently, 25 g of an aqueous solution of 35% hydrogen peroxide (manufactured by Taiki Chemical Industries Co., Ltd.) was added thereto while cooling the liquid to 12°C. The mixture was stirred for 16 hours, thus obtaining 365 g of a transparent green aqueous solution of copper-doped amorphous-type titanium peroxide having a concentration of 0.90% by weight. This was diluted with purified water, thus preparing 385 g of a dispersion of 0.85% by weight of copper-doped amorphous-type titanium peroxide in which the copper was a conductor and the amorphous type titanium peroxide was a dielectric.

Reference Example 2: Liquid for providing photocatalytic function

An aqueous dispersion of an anatase-type titanium peroxide (B56, manufactured by Sustainable Titania Technology Inc.) was employed as a liquid for providing a photocatalytic function.

Reference Example 3: Mixed liquid

The dispersion of the composite of Reference Example 1 and the liquid for providing a photocatalytic function of Reference Example 2 were mixed in a ratio of 7:3, thus preparing a mixed liquid.

Example 1

The dispersion of Reference Example 1 was sprayed onto the surface of a substrate of a commercially available ceramic tile (100 mm X 100 mm) by means of a spray gun at a rate of 20 $g/m^2$ (under wet conditions), and subsequently dried at room temperature, thus producing a sample of Example 1.

Example 2

In the same manner as described in Example 1, the mixed liquid of Reference Example 3 was applied onto the surface of the tile substrate, and subsequently dried at room temperature, thus producing a sample of Example 2.

Comparative Example 1

In the same manner as described in Example 1, the liquid for providing a photocatalytic function of Reference Example 2 was applied onto the surface of the tile substrate, and subsequently dried at room temperature, thus producing a sample of Comparative Example 1.

Comparative Example 2

The tile substrate as it was was employed as Comparative Example 2.

A commercially available red ink (manufactured by Pilot Corporation) which was an organic dye was diluted by a factor of 20 with purified water. The dilution of the ink was applied onto the surface of each of the samples of Examples 1 and 2, and Comparative Examples 1 and 2, with an application amount of 20 $g/cm^2$ (under wet conditions), and subsequently, drying was carried out at room temperature.

Evaluation 1

The samples of Examples 1 and 2 and Comparative Examples 1 and 2 were arranged in parallel, under a 15 W black light (manufactured by National), and were exposed to ultraviolet radiation with an intensity of 1,400 $\mu m/cm^2$. The exposure was continued for 100 hours. Evaluation of fading of the red color was carried out by means of a calorimeter, CR-200 (manufactured by Minolta). The results are shown in Table 1.

Table 1

| Rate of fading of red ink (unit: %) | | | | | | | | |
|---|---|---|---|---|---|---|---|---|
| Time | 0 | 0:35 | 1:35 | 3:05 | 6:30 | 23:20 | 47:40 | 99:45 |
| Example 1 | 0.0 | 1.5 | 3.5 | 12.0 | 28.7 | 49.6 | 65.4 | 77.3 |
| Example 2 | 0.0 | 1.6 | 5.5 | 18.8 | 38.4 | 62.0 | 71.7 | 78.9 |
| Comparative Example 1 | 0.0 | 9.7 | 32.4 | 66.2 | 91.7 | 98.5 | 98.8 | 98.5 |
| Comparative Example 2 | 0.0 | 0.6 | 1.0 | -2.0 | 2.5 | 89.8 | 94.6 | 98.0 |

Results

It can be seen that Examples 1 and 2 exhibit a lower rate of fading of red ink due to ultraviolet radiation, compared to Comparative Examples 1 and 2, and can protect the organic dye from ultraviolet radiation.

In addition, since Examples 1 and 2 provide similar results, it can be seen that a photocatalytic function of the anatase-type titanium peroxide is not exhibited in the presence of the composite of copper and the amorphous-type titanium oxide.

In contrast, in Comparative Example 1, it can be seen that the organic dye is decomposed at an increased rate by the photocatalytic functions of the anatase-type titanium peroxide.

In Comparative Example 1, electrons ($e^-$) photoexcited from the anatase-type titanium peroxide react with oxygen or moisture in the air, and thereby, active radicals ($O_2^-$, $\cdot OH$) are produced. By the action of the active radicals, the organic dye was decomposed.

In contrast, in Examples 1 and 2, the surface of the substrate is under positively charged conditions, and for

this reason, the electrons ($e^-$) required to produce radicals ($O_2^-$, OH) having decomposing abilities are electrically neutralized on the surface of the substrate, and cannot react with oxygen or moisture in the air. For this reason, it can be seen that it is difficult to decompose the organic dye on the surface of the substrate. In other words, it can be seen that the surface of the substrate of each of Examples 1 and 2 carries a positive charge, and oxidative decomposition of the organic products can be reduced.

Example 3

The dispersion of Reference Example 1 was sprayed onto the surface of a substrate made of a commercially available polycarbonate (40 mm X 40 mm) by means of a spray gun at a rate of 20 g/$m^2$ (under the wet condition), and subsequently dried at room temperature, followed by heating in a thermostatic chamber at a constant humidity for 15 minutes at 120°C, thus producing a sample of Example 3.

Comparative Example 3

A polycarbonate substrate as it was was employed as a sample of Comparative Example 3.

Evaluation 2

An aqueous solution of methylene blue (0.02 mol/l) was applied on each of the samples of Example 3 and Comparative Example 3 by means of a spray gun with an application rate of 20 g/$m^2$ (under wet conditions), and subsequently dried at room temperature. A 15 W black light (manufactured by National) was arranged thereon, and exposure to ultraviolet radiation with an intensity of 1 mw/$cm^2$ was carried out. The exposure was continued for 10 hours. Evaluation of fading of the red color was carried out by means of a calorimeter, CR-200 (manufactured by Minolta). The results are shown in Table 2.
Table 2

| Rate of fading of color of methylene blue (unit: %) | | | | | | |
|---|---|---|---|---|---|---|
| Time | 0 | 1:56 | 4:01 | 5:55 | 7:45 | 10:00 |
| Example 3 | 0.0 | 1.0 | 3.8 | 5.6 | 7.3 | 28.7 |
| Comparative Example 3 | 0.0 | 0.0 | 0.0 | 0.0 | 0.0 | 0.0 |

Results

In Example 3, the color of methylene blue having a chemical structure:

[Chemical Formula 2]

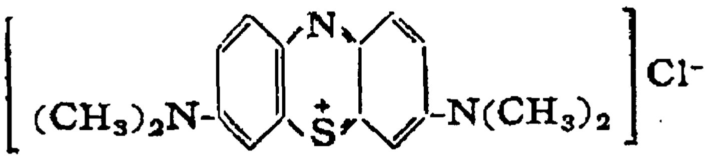

was faded. It can be supposed that this fading occurs by first leaving $Cl^-$ from the methylene blue molecule due to ultraviolet radiation, and subsequently, repelling the positively charged part of the methylene blue molecule with respect to the surface of the substrate having a positive charge, and thereby, leaving the surface of the substrate. In contrast, in Comparative Example 3, no tendency described above was observed.
It can be supposed that not only methylene blue, and but also contaminants in the positively charged state caused by ultraviolet radiation or the like in the sunlight may be repelled and left in view of the results of Example 3. Therefore, Example 3 exhibits functions of autocleansing of contaminants.

Evaluation 3

The samples of Example 3 and Comparative Example 3 were placed in a test apparatus of accelerating weather resistance, and evaluation was carried out for 1,300 hours. Yellow coloration amount (Δ YE) showing the degree of deterioration caused by ultraviolet radiation was 3.8 in Example 3, or 23.0 in Comparative Example 3.

Results

It can be seen that the sample of Example 3 does not exhibit photocatalytic ability, and for this reason, choking does not occur and the degree of deterioration caused by ultraviolet radiation (photooxidative decomposition) is reduced.

Reference Example 4

0.4% by weight of a polyether-modified silicone oil, SH3746 (manufactured by Dow Corning Toray Silicone Co., Ltd.) was added to 100 g of the dispersion of Reference Example 1 to form a sample of Reference Example 4.

Example 4

The dispersion of Reference Example 4 was applied on the surface of a float glass substrate (100 mm X 100 mm) with an application rate of 20 g/$m^2$ (under the wet condition) by means of a spray gun, and subsequently dried at room temperature. The dried product was sufficiently washed with running water, and was subsequently placed in an electrical heater, followed by heating for 15 minutes at 80°C to form a sample of Example 4.

Example 5

A substrate of Example 5 was produced in the same manner as described in Example 4, with the exception of heating for 15 minutes at 200°C in an electrical heater.

Example 6

A substrate of Example 6 was produced in the same manner as described in Example 4, with the exception of heating for 15 minutes at 500°C in an electrical heater.

Comparative Example 4

Only the same heating treatment as described in Example 4 was carried out on a float glass substrate to form a sample of Comparative Example 4.

Comparative Example 5

Only the same heating treatment as described in Example 5 was carried out on a float glass substrate to form a sample of Comparative Example 4 [sic: Comparative Example 5].

Comparative Example 6

Only the same heating treatment as described in Example 6 was carried out on a float glass substrate to form a sample of Comparative Example 4 [sic: Comparative Example 6].

Evaluation 4

The substrates according to Examples 4 to 6 and Comparative Examples 4 to 6 were allowed to stand for one week outside. Subsequently, ultraviolet radiation was exposed thereto for 72 hours (1,200 μw/$cm^2$) Subsequently, purified water was dropped by means of a commercially available dropper. After one minute, the diameter of the moisture film on the substrate was measured. By repeating the measurement three times, the hydrophilic or hydrophobic properties of the substrate were assessed in accordance with evaluation criteria described below.
10 mm or more in diameter: 10° or less in contact angle of the droplet of water and the glass (visual observation): hydrophilic properties.
5 mm or less in diameter: 40° or more in contact angle of the droplet of water and the glass (visual observation):

hydrophobic properties.

Table 3

| Assessment results of hydrophilic properties or hydrophobic properties | | | |
|---|---|---|---|
| | First time | Second time | Third time |
| Example 4 | Hydrophilic properties | Hydrophilic properties | Hydrophilic properties |
| Example 5 | Hydrophilic properties | Hydrophilic properties | Hydrophilic properties |
| Example 6 | Hydrophilic properties | Hydrophilic properties | Hydrophilic properties |
| Comparative Example 4 | Hydrophobic properties | Hydrophobic properties | Hydrophobic properties |
| Comparative Example 5 | Hydrophobic properties | Hydrophobic properties | Hydrophobic properties |
| Comparative Example 6 | Hydrophobic properties | Hydrophobic properties | Hydrophobic properties |

Results

In Examples 4 to 6, superior hydrophilic properties are maintained even if the heat treatment is carried out at any temperature, and it can be seen that capabilities of preventing contamination and preventing fogging are exhibited.

Fundamentally, when a polyether-modified silicone oil is heated, hydrophobic properties are increased by leaving the polyether group having hydrophilic properties. In Examples 4 to 6, the surface of the substrate has a positive charge, and for this reason, effects of adsorbing a hydroxyl group are exhibited. The adsorbed hydroxyl group is replaced with the polyether group, and thereby, hydrophilic properties can be maintained. The phenomenon can be effectively utilized in preventing contamination and preventing fogging.

Reference Example 5: Dispersion of composite of conductor (Sn) and dielectric (amorphous type titanium peroxide)

0.594 g of $SnCl_2 \cdot 2H_2O$ (tin (II) chloride) (manufactured by Yoshihata Kagaku Co., Ltd.) was completely dissolved in 500 g of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of tin hydroxide and titanium hydroxide was precipitated. The precipitate was continually washed with purified water until the conductivity of the supernatant was not more than 0.8 mS/m. The washing was stopped when the conductivity had become 0.713 mS/m. Thereby, 304 g of a liquid containing 0.70% by weight of the hydroxide was produced.

Subsequently, 25 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 328 g of a transparent brownish yellow solution of tin-doped amorphous-type titanium peroxide having a concentration of 0.8% by weight.

Reference Example 6: Dispersion of composite of conductor (Zn) and dielectric (amorphous type titanium peroxide)

0.359 g of $ZnCl_2$ (zinc chloride) was completely dissolved in 500 g of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of zinc hydroxide and titanium hydroxide was precipitated. The precipitate was continually washed with purified water until the conductivity of the supernatant was not more than 0.8 mS/m. The washing was stopped when the conductivity had become 0.713 mS/m. Thereby, 409 g of a liquid containing 0.48% by weight of the hydroxide was produced. Subsequently, 25 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 430 g of a transparent brownish yellow aqueous solution of zinc-doped amorphous-type titanium peroxide.

In addition, 100 g of the aforementioned aqueous solution of the zinc-doped amorphous-type titanium peroxide was weighed out, and was heated for 5 hours at 100°C. Thereby, 48 g of a pale yellow sol of the zinc-doped anatase-type titanium peroxide with a concentration of 0.96% by weight was obtained.

Reference Example 7: Dispersion of composite of conductor (A1) and dielectric (amorphous type titanium peroxide)

0.712 g of $AlCl_3 \cdot 6H_2O$ (aluminum chloride) (manufactured by Yoshihata Kagaku Co., Ltd.) was completely dissolved in 500 ml of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of aluminum hydroxide and titanium hydroxide was precipitated. The precipitate was continually washed with purified water until the conductivity of the supernatant was not more than 0.8 mS/m. The washing was stopped when the conductivity had become 0.744 mS/m. Thereby, 290 g of a liquid containing 0.68% by weight of the hydroxide was produced.

Subsequently, 25 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 314 g of a transparent brownish yellow solution of aluminum-doped amorphous-type titanium peroxide having a concentration of 0.79% by weight.

Reference Example 8: Dispersion of composite of conductor (Fe) and dielectric (amorphous type titanium peroxide)

0.712 g of $FeCl_3 \cdot 6H_2O$ was completely dissolved in 500 ml of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of iron hydroxide and titanium hydroxide was precipitated. The precipitate was continually washed with purified water until the conductivity of the supernatant was not more than 0.8 mS/m. The washing was stopped when the conductivity had become 0.744 mS/m. Thereby, 420 g of a liquid containing 0.47% by weight of the hydroxide was produced.

Subsequently, 25 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 440 g of a transparent dark brownish yellow dispersion of iron-doped amorphous-type titanium peroxide having a concentration of 0.44% by weight. The dispersion was concentrated by means of an ultrafiltration concentration apparatus, and thereby, 220 g of the dispersion having a concentration of 0.85% by weight was obtained.

Reference Example 9: Dispersion of composite of conductor (Mn) and dielectric (amorphous type titanium peroxide)

0.521 g of $MnCl_2 \cdot 4H_2O$ (manufactured by Komune Kagaku Yakuhin, Co., Ltd.) was completely dissolved in 500 ml of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of manganese hydroxide and titanium hydroxide was precipitated. The precipitate was continually washed with purified water until the conductivity of the supernatant was not more than 0.8 mS/m. The washing was stopped when the conductivity had become 0.650 mS/m. Thereby, 343 g of a liquid containing 0.77% by weight of the hydroxide was produced.

Subsequently, 25 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 367 g of a transparent brownish black dispersion of manganese-doped amorphous-type titanium peroxide having a concentration of 0.87% by weight. The dispersion was diluted with purified water, and thereby, 375 g of the dispersion of manganese-doped amorphous-type titanium peroxide having a concentration of 0.85% by weight was obtained.

Reference Example 10: Dispersion of composite of conductor (Ni) and dielectric (amorphous type titanium peroxide)

0.594 g of $NiCl_2 \cdot 6H_2O$ (manufactured by Nihon Kagaku Sangyo Co., Ltd.) was completely dissolved in 500 ml of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of nickel hydroxide and titanium hydroxide was precipitated. The precipitate was continually washed with purified water

until the conductivity of the supernatant was not more than 0.8 mS/m. The washing was stopped when the conductivity had become 0.650 mS/m. Thereby, 343 g of a liquid containing 0.77% by weight of the hydroxide was produced.

Subsequently, 25 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 374 g of a transparent pale yellow dispersion of nickel-doped amorphous-type titanium peroxide having a concentration of 0.87% by weight. The dispersion was diluted with purified water, and thereby, 381 g of the dispersion of nickel-doped amorphous-type titanium peroxide having a concentration of 0.85% by weight was obtained.

Reference Example 11: Dispersion of composite of conductor (In) and dielectric (amorphous-type titanium peroxide)

0.772 g of $InCl_3 \cdot 4H_2O$ (indium (III) chloride, manufactured by Soekawa Chemical Co., Ltd.) was completely dissolved in 500 ml of purified water, and 10 g of a 50% titanium tetrachloride solution (manufactured by Sumitomo Sitix Co., Ltd.) was further added to the solution. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of indium hydroxide and titanium hydroxide was precipitated. The precipitate was continually washed with purified water until the conductivity of the supernatant was not more than 0.8 mS/m. The washing was stopped when the conductivity had become 0.724 mS/m. Thereby, 328 g of a liquid containing 0.74% by weight of the hydroxide was produced.

Subsequently, 56 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 380 g of a transparent brownish yellow dispersion of indium-doped amorphous-type titanium peroxide having a concentration of 0.73% by weight.

Control Example 12: Dispersion of dielectric (amorphous type titanium peroxide)

10 g of a 50% titanium tetrachloride solution (manufactured by Sumitomo Sitix Co., Ltd.) was added to 500 ml of purified water. Purified water was added thereto to increase the volume up to 1000 ml, and thereby, a solution was prepared. Aqueous ammonia obtained by diluting 25% aqueous ammonia (manufactured by Takasugi Pharmaceutical Co., Ltd.) by a factor of 10 was added dropwise to the solution to adjust the pH to 7.0. Thereby, a mixture of titanium hydroxide was precipitated. The precipitate was continually washed with purified water until the conductivity of the supernatant was not more than 0.8 mS/m. The washing was stopped when the conductivity had become 0.738 mS/m. Thereby, 398 g of a liquid containing 0.73% by weight of the hydroxide was produced.

Subsequently, 25 g of an aqueous solution of 35% hydrogen peroxide (manufactured by Taiki Chemical Industries Co., Ltd.) was added thereto while cooling the liquid to 1 to 5°C. The mixture was stirred for 16 hours, thus obtaining 420 g of a transparent pale brownish yellow solution of amorphous-type titanium peroxide having a concentration of 0.86% by weight.

Evaluation 5

Each of the dispersions of composites of conductors and dielectrics of Reference Example 1 and Reference Examples 5 to 11 was sprayed onto a commercially available ceramic tile (100 mm X 100 mm) substrate with an application amount (wet state) of 15 g/cm$^2$, and drying was carried out at room temperature, followed by heating for 15 minutes at 200°C in a thermostatic and humidity-constant container.

A commercially available red ink (manufacture by Pilot Corporation) was diluted by a factor of 20 with purified water, and subsequently, the diluted ink was applied uniformly onto each of the substrates with an application amount of 5 g/m$^2$ (wet state). Drying was carried out, thus producing each of Evaluation Substrates 1 and 5 to 11.

The same processes were carried out using Control Example 12, thus producing Control Substrate 1.

Evaluation Substrate 1, Evaluation Substrates 5 to 11, and Control Substrate 1 were arranged in parallel under a 20 W black light (manufactured by National), and irradiated for 42 hours using ultraviolet radiation with an intensity of 1,000 μw/cm$^2$. Subsequently, a red-fading evaluation was carried out using a colorimeter CR-200 (manufactured by Minolta). The results are shown in FIG. 5.

$$\text{Fading rate} = 100 - \sqrt{((L2 - L0)^2 + (a2 - a0)^2 + (b2 - b0)^2)} / \sqrt{((L1 - L0)^2 + (a1 - a0)^2 + (b1 - b0)^2)} * 100$$

$$\text{Remaining rate} = 100 - \text{fading rate}$$

$$= \sqrt{}((L2 - L0)^2 + (a2 - a0)^2 + (b2 - b0)^2)/\sqrt{}((L1 - L0)^2 + (a1 - a0)^2 + (b1 - b0)^2)*100$$

Color of each of the substrates before red coloring: (L0, a0, b0)

Color of each of the substrates after red coloring: (L1, a1, b1)

Color of each of the substrates after irradiation with ultraviolet radiation: (L2, a2, b2)

Results

It can be seen that all of Evaluation Substrate 1 and Evaluation Substrates 5 to 11 exhibit superior capability of preventing fading, compared to Control Substrate 1 consisting of only the dielectric, and have functions of reducing color degradation.

To have functions of reducing color degradation means having resistance to fading of a dye (red color), and in other words, having positive charge properties which hardly cause the production of $^1O_2$ (singlet oxygen) or OH (hydroxyl radicals) from $O_2$ or $H_2O$ on the surface of the substrate by the effects of electromagnetic radiation. On the surface of the substrate having a positive charge, even if airborne contaminants are adhered thereto, a positive charge is provided on the contaminants by means of electromagnetic radiation. For this reason, the contaminants are removed from the surface of the substrate by means of electrostatic repulsion. Therefore, this means having the capability of preventing contamination. In addition, ultraviolet degradation (oxidative degradation) of the substrate, itself, due to sunlight or the like can also be reduced.

Evaluation 6

Evaluation Substrate 12 (polyaniline)

A dispersion was prepared by mixing 50 g of the dispersion of the amorphous-type titanium peroxide produced in the steps of Control Example 12 as a dielectric, with 2.5 g of a polyaniline dispersion (ORMECON D1012W: solid concentration = 3%, and average particle size = 100 nm or less) which was a conductive organic polymer resin as a conductor. SH3746M (manufactured by Dow Corning Toray Silicone Co., Ltd.), in an amount of 0.1%, was added thereto, and thereby, a coating liquid was prepared. The coating liquid was sprayed onto a white tile to form a coating film having a film thickness of approximately 0.2 μm by means of spray coating, followed by heating and fixing for 15 minutes at 200°C. Thereby, Evaluation Substrate 12 was produced.

Evaluation Substrate 13 (barium titanate)

A dispersion was prepared by mixing 48.3 g of the solution of the copper-doped amorphous-type titanium peroxide prepared in the steps of Reference Example 1 as a conductor, with 1.7 g of barium titanate as a dielectric, and stirring the mixture. SH3746M (manufactured by Dow Corning Toray Silicone Co., Ltd.), in an amount of 0.1%, was added thereto, and thereby, a coating liquid was prepared. The coating liquid was sprayed onto a white tile to form a coating film having a film thickness of approximately 0.2 μm by means of spray coating, followed by heating and fixing for 15 minutes at 200°C. Thereby, an evaluation substrate was produced.

Evaluation Substrate 14 (methyl silicate)

A dispersion was prepared by mixing 45 g of the solution of the copper-doped amorphous-type titanium peroxide prepared in the steps of Reference Example 1 as a conductor, with 15 g of methyl silicate MSH200 (manufactured by Tama Chemical Co., Ltd.) as a dielectric, and stirring the mixture. SH3746M (manufactured by Dow Corning Toray Silicone Co., Ltd.), in an amount of 0.1%, was added thereto, and thereby, a coating liquid was prepared. The coating

liquid was sprayed onto a white tile to form a coating film having a film thickness of approximately 0.2 μm by means of spray coating, followed by heating and fixing for 15 minutes at 200°C. Thereby, an evaluation substrate was produced.

As a control, the same substrate as Control Substrate 1 employed in Evaluation 5 was employed as Control Substrate 2.

A commercially available red ink (manufactured by Pilot Corporation) which was an organic dye was diluted with ethanol by a factor of 10, and was subsequently applied onto the surface of each of Evaluation Substrates 12 to 14 and Control Substrate 2 by means of a spray gun with an application amount of 7 g/m$^2$ (wet state), followed by drying at room temperature.

In the same manner as described in Evaluation 5, ultraviolet radiation was irradiated thereto for 26 hours and 10 minutes. Fading evaluation of red color was carried out using a calorimeter CR-200 (manufactured by Minolta). The results are shown in FIG. 6.

Results

It can be seen that all of Evaluation Substrates 12 to 14 exhibit functions of reducing color degradation.

Evaluation 7

A substrate shown in FIG. 7 was prepared using a commercially available red plate made of a polypropylene sheet (chlorine free) for use in industrial art. In FIG. 7, part (A) was a part on which the solution of the copper-doped amorphous-type titanium peroxide prepared in the steps of Reference Example 1 was applied with an application rate of 15 g/100 cm$^2$. Part (B) was a part on which the solution of the copper-doped amorphous-type titanium peroxide prepared in the steps of Reference Example 1 was applied with an application rate of 10 g/100 cm$^2$, and subsequently, the liquid providing photocatalytic function of Reference Example 2 was applied with an application rate of 20 g/100 cm$^2$. Part (C) was a non-coated part in which no surface treatments were carried out.

The aforementioned substrate was fixed so that the lower end of the substrate was at a height of 1300 mm from the ground in the direction of southeast in Saga Prefecture in Japan, and exposed to the outdoors for one year. Thereby, evaluation of preventing contamination was carried out. The results are shown in FIG. 8.

Results

The aforementioned part (A) in the substrate has the same color as that of the non-coated part at the start of evaluation, and has the smallest change in each of L*, a*, and b* between the initial time of the evaluation and one year after. Therefore, it can be seen that part (A) does not impair the color of the substrate and exhibits superior properties of preventing contamination, compared to part (B). Part (A) also exhibits remarkably superior properties of preventing contamination, compared to non-coated part (C).

## Claims

1. A method for generating positive charge on a surface of a substrate, **characterized by** arranging a composite formed from a conductor and a dielectric or a semiconductor on the surface of the substrate or in a surface layer of the substrate.

2. A method for making a surface of a substrate hydrophilic, **characterized by** arranging a composite formed from a conductor and a dielectric or a semiconductor on the surface of the substrate or in a surface layer of the substrate.

3. A method for preventing or reducing contamination of a surface of a substrate, **characterized by** arranging a composite formed from a conductor and a dielectric or a semiconductor on the surface of the substrate or in a surface layer of the substrate.

4. A method for protecting a surface of a substrate, **characterized by** arranging a composite formed from a conductor and a dielectric or a semiconductor on the surface of the substrate or in a surface layer of the substrate.

5. The method according to any one of Claims 1 to 4, wherein said composite contains an organic silicon compound.

6. The method according to any one of Claims 1 to 5, wherein between said surface of the substrate and said composite, an intermediate layer is formed.

**7.** The method according to any one of Claims 1 to 6, wherein on the surface of said composite, a photocatalytic layer is formed.

**8.** A positive charge generator for a surface of a substrate, consisting of a composite formed from a conductor and a dielectric or a semiconductor.

**9.** An agent for making a surface of a substrate hydrophilic, consisting of a composite formed from a conductor and a dielectric or a semiconductor.

**10.** A contamination preventor or reducer for a surface of a substrate, consisting of a composite formed from a conductor and a dielectric or a semiconductor.

**11.** A protector for a surface of a substrate, consisting of a composite formed from a conductor and a dielectric or a semiconductor.

FIG. 1

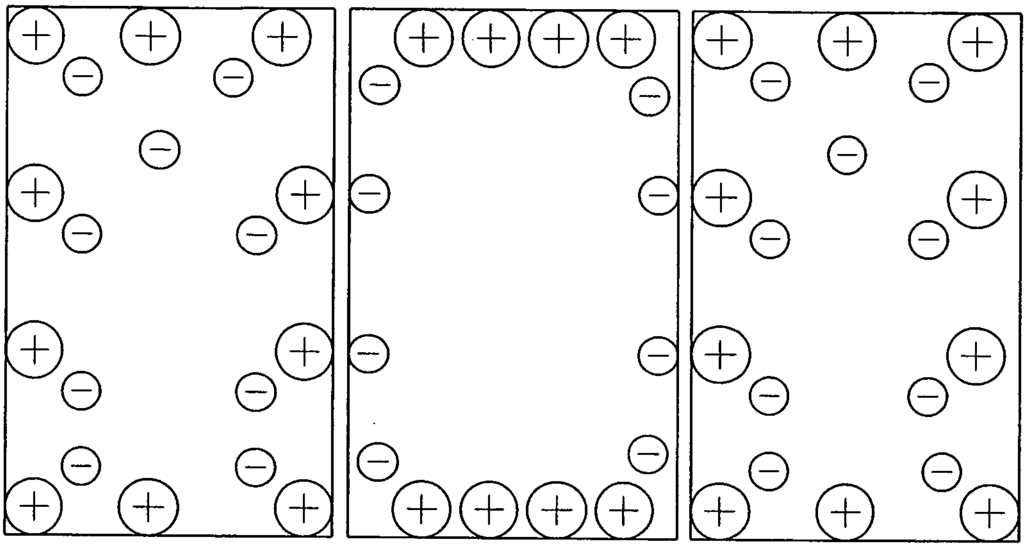

FIG. 2

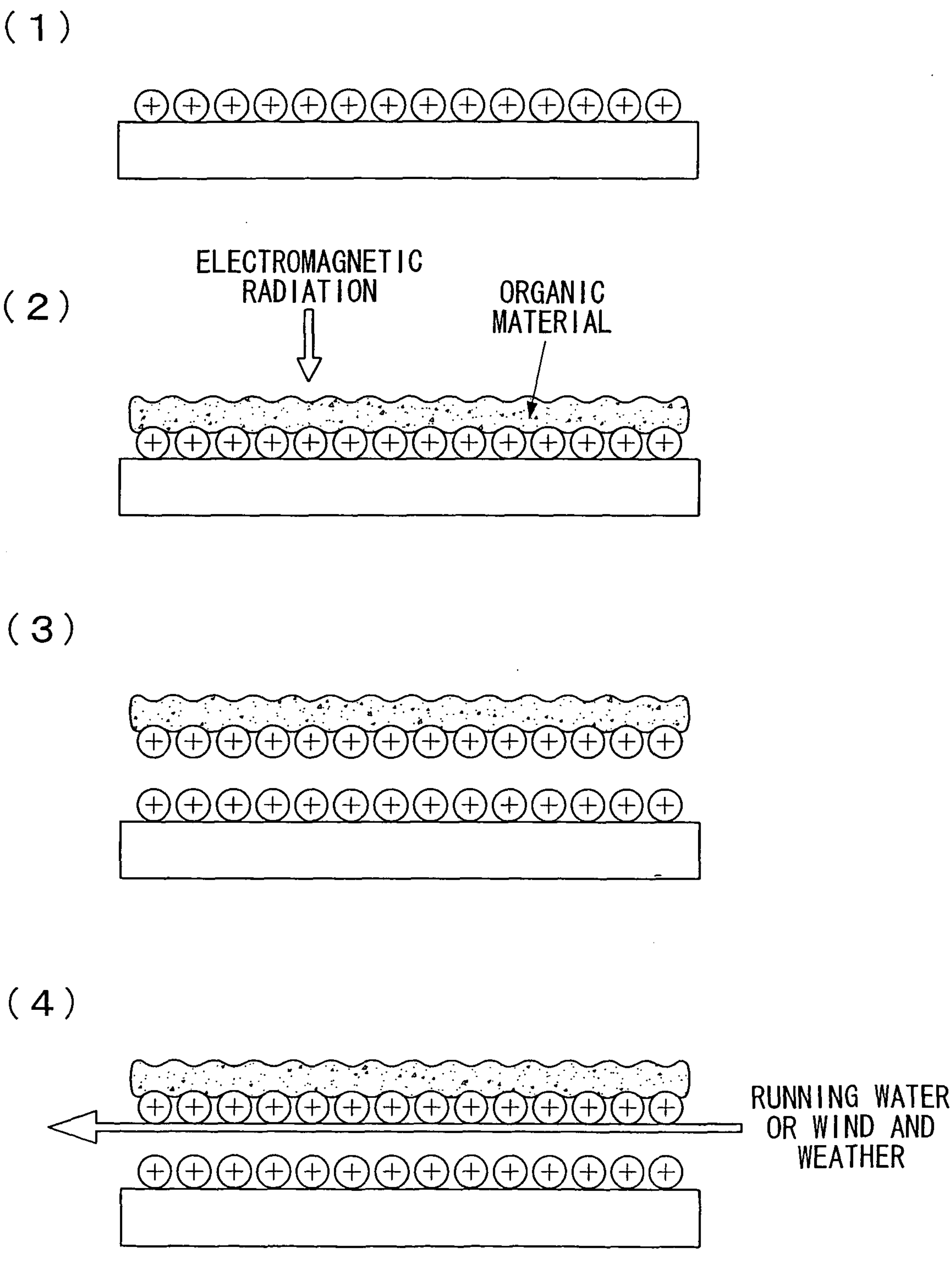
(1)
(2)
ELECTROMAGNETIC RADIATION
ORGANIC MATERIAL
(3)
(4)
RUNNING WATER OR WIND AND WEATHER

FIG. 3

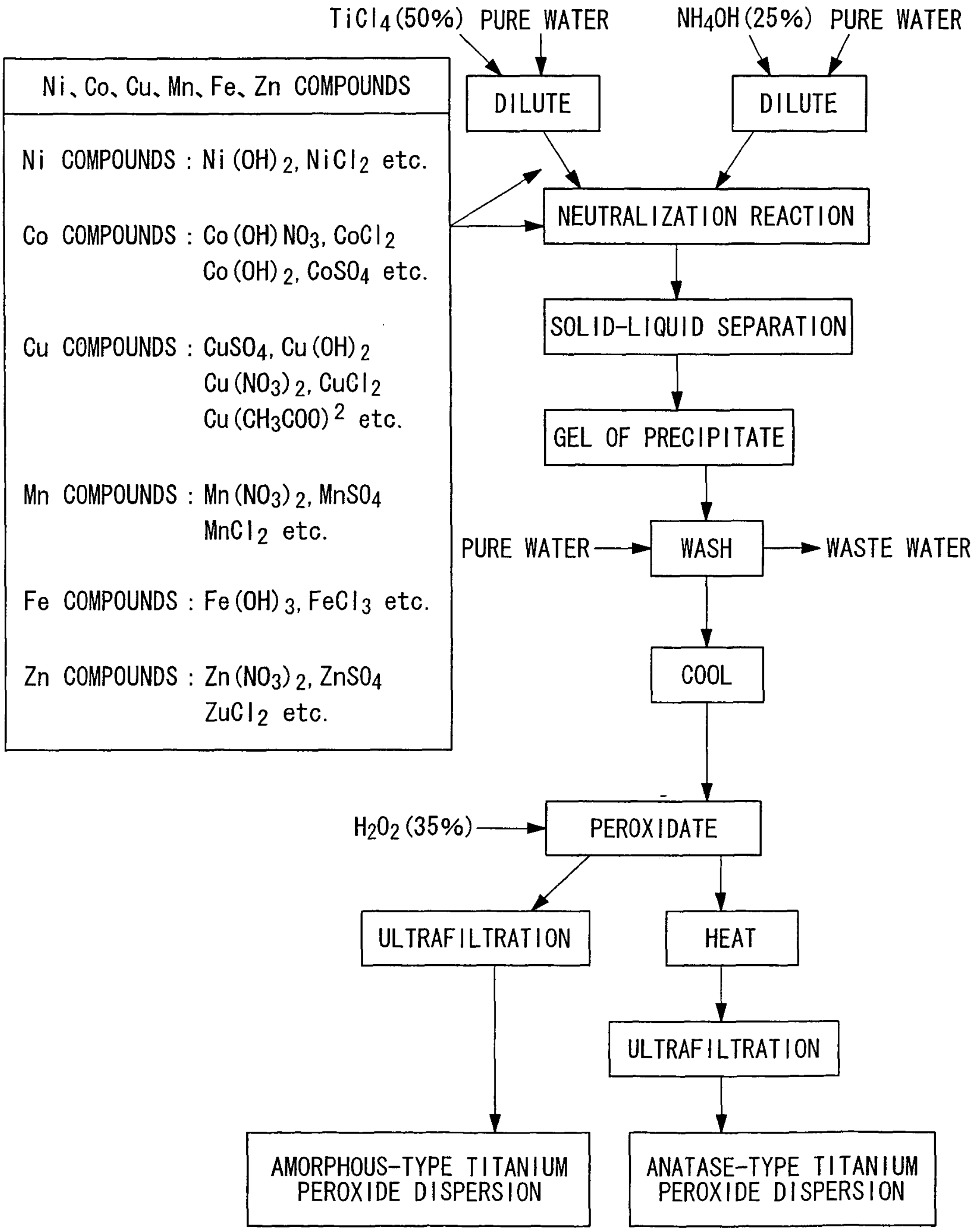
TiCl4(50%)
PURE WATER
NH4OH(25%)
PURE WATER
DILUTE
DILUTE
Ni、Co、Cu、Mn、Fe、Zn COMPOUNDS
Ni COMPOUNDS : Ni(OH)2, NiCl2 etc.
Co COMPOUNDS : Co(OH)NO3, CoCl2
Co(OH)2, CoSO4 etc.
Cu COMPOUNDS : CuSO4, Cu(OH)2
Cu(NO3)2, CuCl2
Cu(CH3COO)2 etc.
Mn COMPOUNDS : Mn(NO3)2, MnSO4
MnCl2 etc.
Fe COMPOUNDS : Fe(OH)3, FeCl3 etc.
Zn COMPOUNDS : Zn(NO3)2, ZnSO4
ZuCl2 etc.
NEUTRALIZATION REACTION
SOLID-LIQUID SEPARATION
GEL OF PRECIPITATE
PURE WATER
WASH
WASTE WATER
COOL
H2O2(35%)
PEROXIDATE
ULTRAFILTRATION
HEAT
ULTRAFILTRATION
AMORPHOUS-TYPE TITANIUM PEROXIDE DISPERSION
ANATASE-TYPE TITANIUM PEROXIDE DISPERSION

FIG. 4

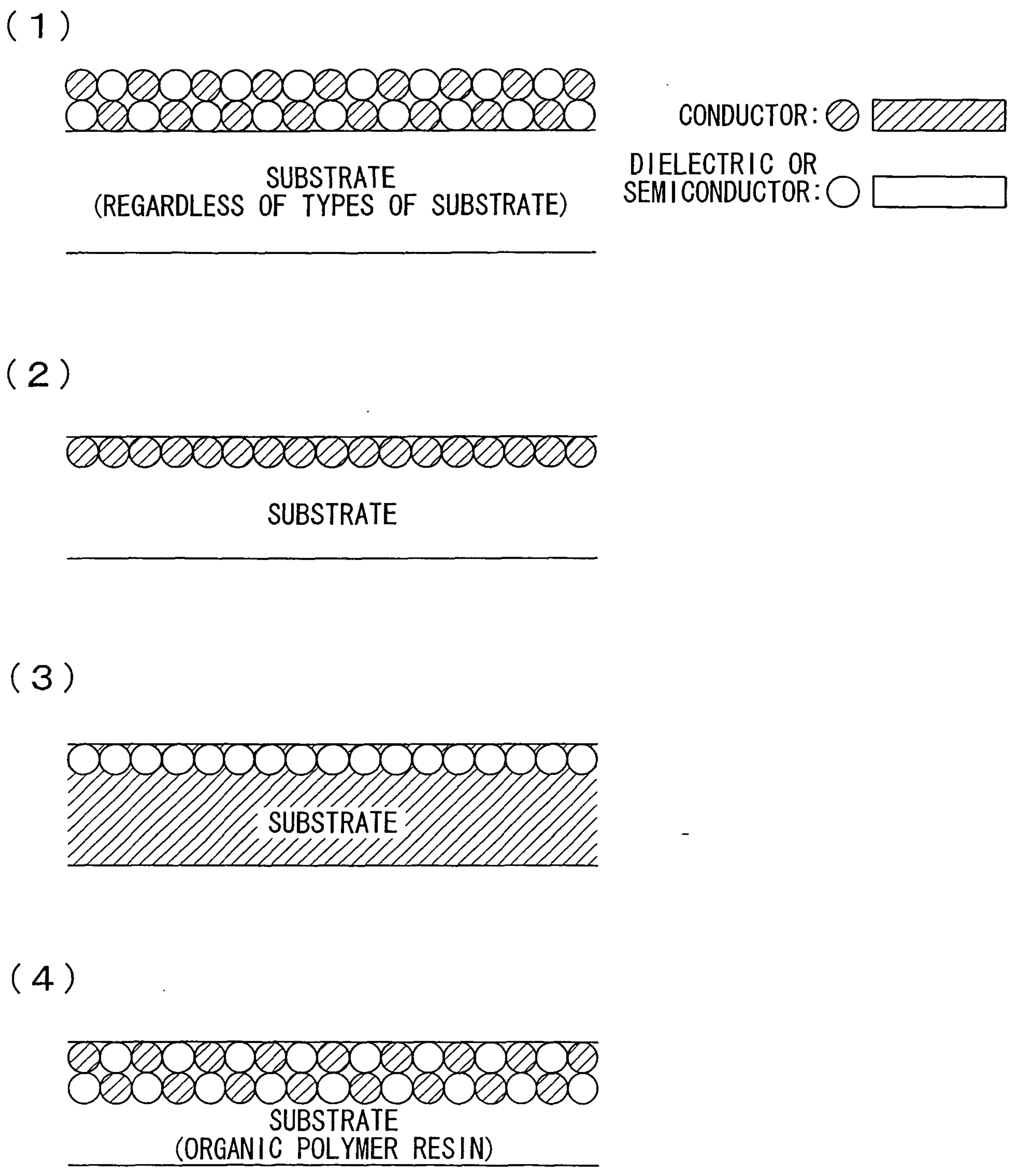
(1)
CONDUCTOR:
DIELECTRIC OR
SEMICONDUCTOR:
SUBSTRATE
(REGARDLESS OF TYPES OF SUBSTRATE)
(2)
SUBSTRATE
(3)
SUBSTRATE
(4)
SUBSTRATE
(ORGANIC POLYMER RESIN)

FIG. 5

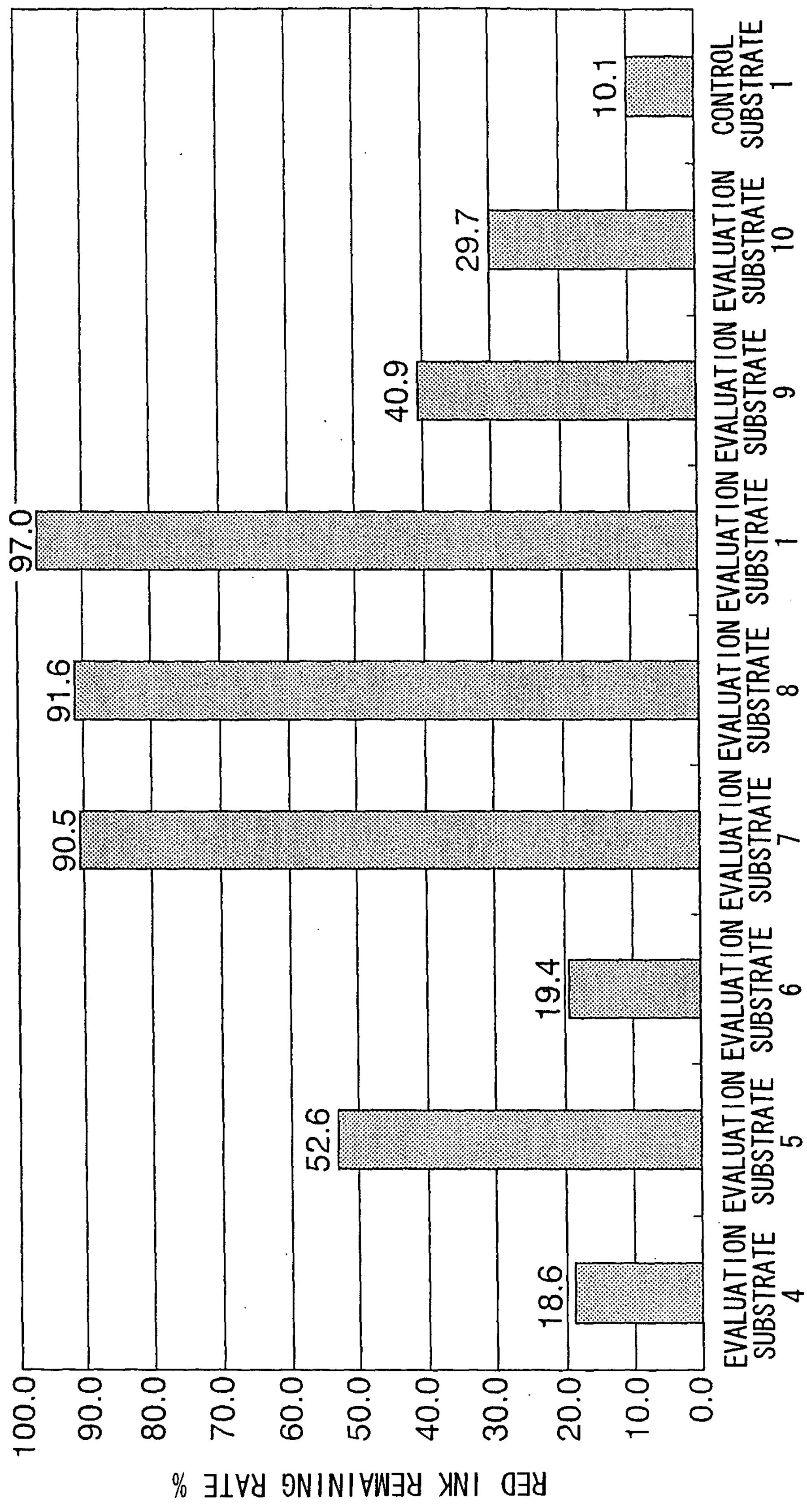
RED INK REMAINING RATE %
100.0
90.0
80.0
70.0
60.0
50.0
40.0
30.0
20.0
10.0
0.0
18.6
52.6
19.4
90.5
91.6
97.0
40.9
29.7
10.1
EVALUATION SUBSTRATE 4
EVALUATION SUBSTRATE 5
EVALUATION SUBSTRATE 6
EVALUATION SUBSTRATE 7
EVALUATION SUBSTRATE 8
EVALUATION SUBSTRATE 1
EVALUATION SUBSTRATE 9
EVALUATION SUBSTRATE 10
CONTROL SUBSTRATE 1

FIG. 6

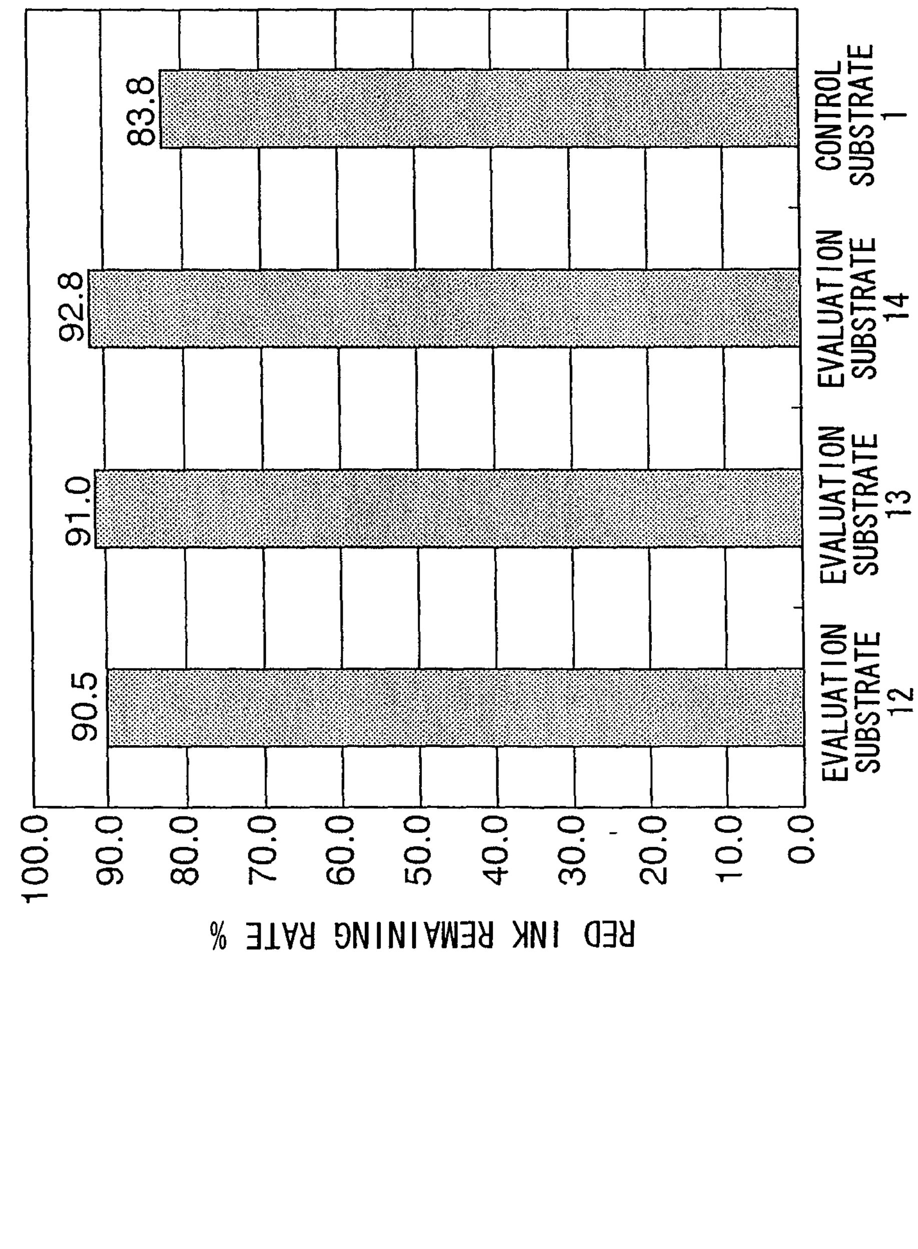

RED INK REMAINING RATE %
100.0
90.0
80.0
70.0
60.0
50.0
40.0
30.0
20.0
10.0
0.0
90.5
91.0
92.8
83.8
EVALUATION SUBSTRATE 12
EVALUATION SUBSTRATE 13
EVALUATION SUBSTRATE 14
CONTROL SUBSTRATE 1

FIG. 7

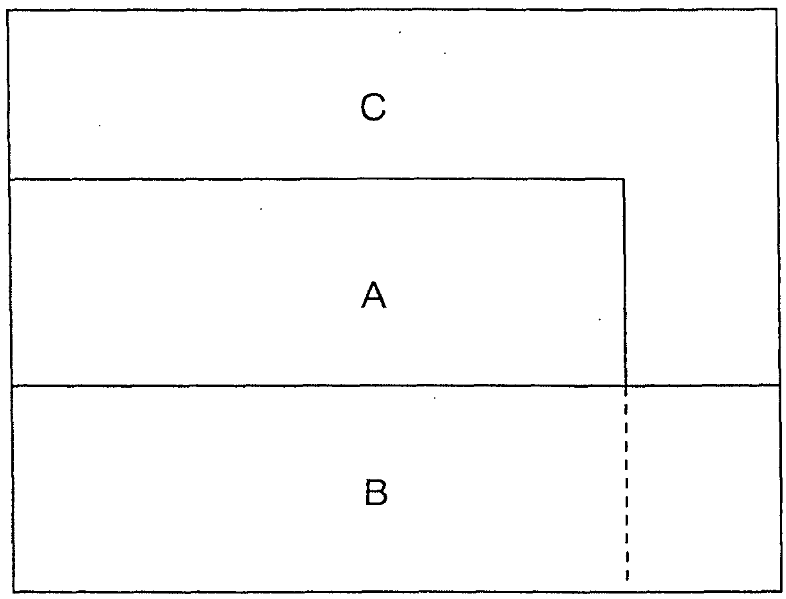

# FIG. 8

| | INITIAL TIME | | | AFTER ONE YEAR | | |
|---|---|---|---|---|---|---|
| | L* | a* | b* | L* | a* | b* |
| C | 45.65 | 48.51 | 28.39 | 43.20 | 44.65 | 26.01 |
| A | 45.54 | 48.47 | 28.09 | 44.81 | 48.78 | 27.46 |
| B | 48.62 | 43.26 | 21.04 | 47.58 | 45.06 | 22.11 |

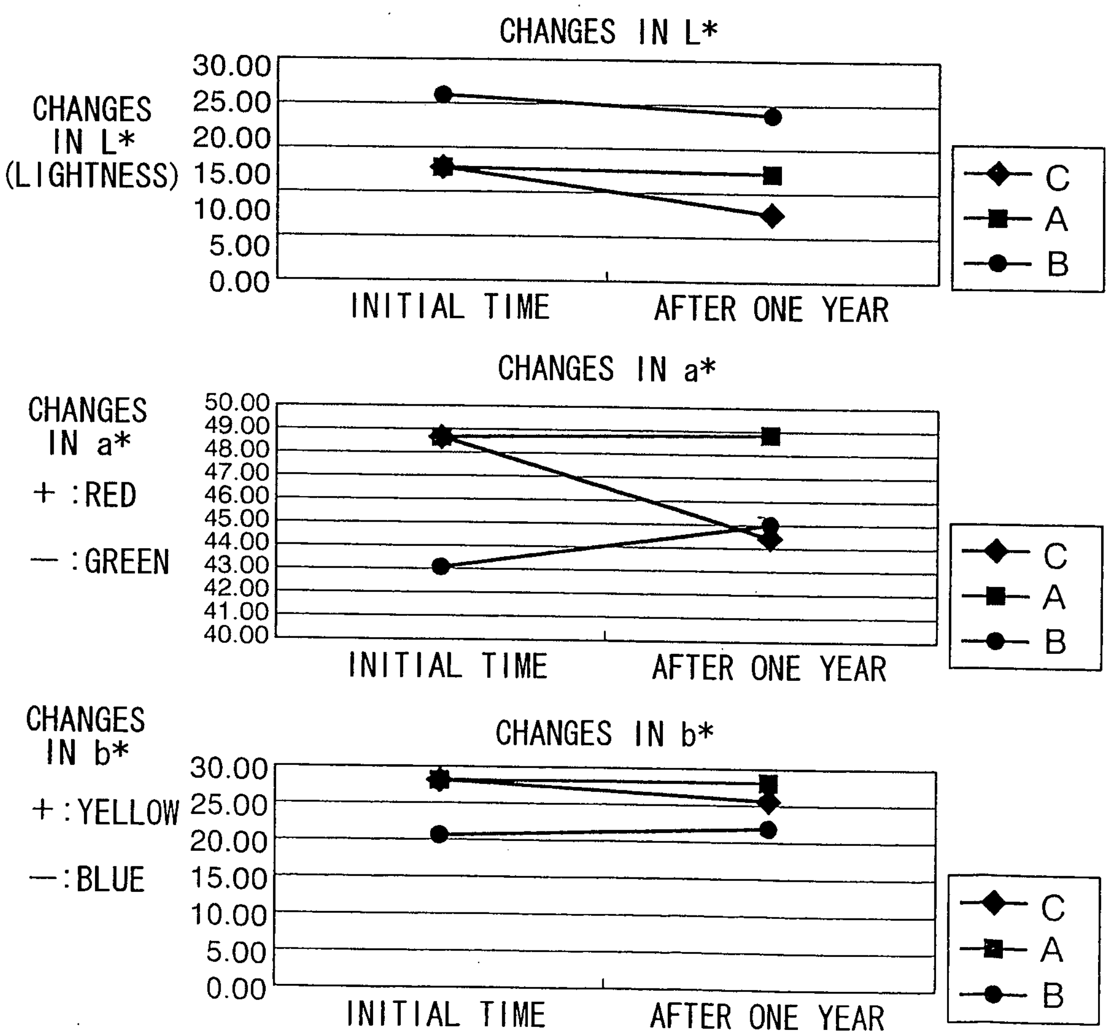

## INTERNATIONAL SEARCH REPORT

International application No.
PCT/JP2005/008289

A. CLASSIFICATION OF SUBJECT MATTER
Int.Cl7 B32B9/00, B01J35/02, B32B7/02, C09K3/00, 3/18//C09D201/00

According to International Patent Classification (IPC) or to both national classification and IPC

B. FIELDS SEARCHED

Minimum documentation searched (classification system followed by classification symbols)
Int.Cl7 B32B9/00, B01J35/02, B32B7/02, C09K3/00, 3/18, C09D201/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-306347 A (Bridgestone Corp.), 28 October, 2003 (28.10.03), Claims (Family: none) | 1-11 |
| A | JP 2001-253006 A (Asahi Kasei Corp.), 18 September, 2001 (18.09.01), Claims (Family: none) | 1-11 |
| A | JP 2001-58002 A (Mitsubishi Paper Mills Ltd.), 06 March, 2001 (06.03.01), Claims; Par. Nos. [0020], [0056] to [0066] (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 August, 2005 (23.08.05) | 13 September, 2005 (13.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No. PCT/JP2005/008289

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-280397 A (Asahi Chemical Industry Co., Ltd.), 10 October, 2000 (10.10.00), Claims (Family: none) | 1-11 |
| A | JP 2000-233462 A (Tao Inc.), 29 August, 2000 (29.08.00), Claims (Family: none) | 1-11 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004137330 A
- JP H09262481 A
- JP 2000159786 A
- JP H04242499 A
- JP H09165318 A